**Europäisches Patentamt**

**European Patent Office**

**Office européen des brevets**

(11) Veröffentlichungsnummer: **0 494 478 A1**

## EUROPÄISCHE PATENTANMELDUNG

(21) Anmeldenummer: **91250340.6**

(22) Anmeldetag: **20.12.91**

(51) Int. Cl.5: **F16H 37/08**

(30) Priorität: **07.01.91 DE 4100474**

(43) Veröffentlichungstag der Anmeldung:
**15.07.92 Patentblatt 92/29**

(84) Benannte Vertragsstaaten:
**DE ES FR GB**

(71) Anmelder: **MANNESMANN Aktiengesellschaft**
**Mannesmannufer 2**
**W-4000 Düsseldorf 1(DE)**

(72) Erfinder: **Berger, Günter**
**Iltisweg 6**
**W-4350 Recklinghausen(DE)**

(74) Vertreter: **Presting, Hans-Joachim, Dipl.-Ing.**
**et al**
**Meissner & Meissner Patentanwaltsbüro**
**Herbertstrasse 22**
**W-1000 Berlin 33(DE)**

(54) **Antrieb mit einem Stellkoppelgetriebe zur Konstanthaltung der Drehzahl einer Arbeitsmaschine.**

(57) Die Erfindung betrifft einen Antrieb mit einem Stellkoppelgetriebe (K) zur Konstanthaltung der Drehzahl einer Arbeitsmaschine (G), insbesondere eines Generators, das eine an eine Welle (11) einer Antriebsanlage (n) anschließbares Planetengetriebe (10) sowie ein Verstellgetriebe (20) aufweist, dessen mit der Arbeitsmaschine (M) verbindbare Antriebswelle (11) achsparallel zur Antriebswelle (27) des Stellkoppelgetriebes (k) angeordnet ist.

Um bei einem derartigen Antrieb bei möglichst kleiner Verstell-Leistung einen hohen Wirkungsgrad über einen angemessenen Drehzahlbereich zu erreichen, wird erfindungsgemäß vorgeschlagen, daß das Stellkoppelgetriebe (K) eine negative Gesamtübersetzung besitzt und daß das Verstellgetriebe (20) als Zugmittelgetriebe ausgebildet ist.

Fig.1

EP 0 494 478 A1

Die Erfindung betrifft einen Antrieb mit einem Stellkoppelgetriebe zur Konstanthaltung der Drehzahl einer Arbeitsmaschine, insbesondere eines Generators, das ein an eine Welle einer Antriebsanlage anschließbares Planetengetriebe sowie ein Verstellgetriebe aufweist, dessen mit der Arbeitsmaschine verbindbare Abtriebswelle achsparallel zur Antriebswelle des Stellkoppelgetriebes angeordnet ist.

Die Stromversorgung erfolgt beispielsweise bei Schiffen regelmäßig durch Drehstrom, der von Generatoren erzeugt wird. Diese werden teilweise von Dieselmotoren mit konstanten Drehzahlen angetrieben. Aus Gründen der Wirtschaftlichkeit aber wird der Generatorstrom, insbesondere bei Marschfahrt, vom Hauptantriebsmotor erzeugt. Die Üblicherweise eingesetzten Schiffsantriebsmaschinen weisen - gerade beim Einsatz von Festpropellern - eine variable Drehzahl auf.

Windkraftwerksanlagen beispielsweise erlauben eine Energieerzeugung mittels Generator nur ab einer bestimmten minimalen Windgeschwindigkeit. Diese ist in Abstimmung mit dem zwischen dem Rotor und dem Generator liegenden Getriebe und der darin realisierten Übersetzung festzulegen.

Zur Konstanthaltung der Drehzahl der Generatoren bzw. zur Vergrößerung des Arbeitsbereiches der Arbeitsmaschinen kommen Überlagerungsgetriebe zum Einsatz, die zwischen dem Antriebsaggregat und der Arbeitsmaschine angeordnet werden und eine automatische Drehzahlregelung aufweisen.

So ist aus der DE-OS 22 08 511 eine Schiffsantriebsanlage mit einem vom Hauptantriebsmotor angetriebenen Überlagerungsgetriebe zum Konstantantrieb eines Generators bekannt, bei dem als Stellgetriebe ein von einer hydrostatischen Pumpe gespeister Hydromotor eingesetzt wird.

Neben dem komplizierten Aufbau sowie dem Erfordernis des Einsatzes einer zusätzlichen Energiestation für die Hydraulikanlage weist ein derartiges Stellkoppelsystem den Nachteil des relativ geringen Leistungsgrades hydraulischer Anlagen auf.

Aus der DE-OS 34 08 543 ist ein stufenlos regelbares Getriebe bekannt, bei dem für den Drehzahlverstellmechanismus u.a. Riemenantriebe zum Einsatz kommen.

Bei diesem in einem Leistungsbereich für Kraftfahrzeuge vorgesehenen Stufenlosgetriebe liegt der Schwerpunkt auf dem Übersetzungsverhältnis über einen weiten Stellbereich. Die Folge hiervon sind bei Schiffsantrieben nicht mehr übertragbare Drehmomente an den Drehzahlverstellgliedern des Verstellgetriebes. Die insgesamt übertragbare Leistung ist begrenzt durch die im Verstellgetriebe durchsetzbare Leistung, d.h. das Verstellgetriebe ist auszulegen auf die maximale Antriebsleistung. Bedingt hierdurch ist der im Verstellbereich zu erzielende Gesamtwirkungsgrad höchstens gleich dem Einzelwirkungsgrad des Verstellorgans.

Aufgabe der Erfindung ist es, einen konstruktiv einfachen, kompakten Antrieb mit einem Stellkoppelgetriebe zur Konstanthaltung der Drehzahl einer Arbeitsmaschine zu schaffen, der bei möglichst kleiner Verstell-Leistung einen hohen Wirkungsgrad über einen angemessenen Drehzahlbereich aufweist.

Die Erfindung löst diese Aufgabe durch die Merkmale des kennzeichnenden Teils des Anspruchs 1.

Für das Stellkoppelgetriebe, das eine Kopplung von einem in Kraftrichtung vorgeschalteten Umlaufgetriebe sowie ein Verstellgetriebe und eine Stirnradstufe aufweist, ist eine negative Gesamtübersetzung vorgesehen. Hierbei ergibt sich eine günstige Umlaufgetriebekonstellation, da einstufige Minusgetriebe zum Einsatz kommen. Diese Planetengetriebe, die sich aus einem inneren Zentralrad, dem Planetenträger (Steg) mit den Planetenrädern und einem innen verzahnten äußeren Zentralrad aufbauen, besitzen die höchsten Wirkungsgrade. Bei ihnen ist generell die von den Verzahnungen zu übertragende Gleitwälzleistung bei drehendem Steg kleiner als die installierte Antriebsleistung.

Der Verstellbereich des Stellkoppelgetriebes ist daher um den Faktor 2,8 bis 3,2 kleiner als der des Verstellgetriebes, dessen zu übertragende Verstell-Leistung möglichst klein gehalten wird. Auf diese Weise können geringer belastete stufenlose Verstellgetriebe verwendet werden bzw. kann eine mehrfach größere Antriebsleistung als die übertragbare Leistung des Verstellgetriebes installiert werden.

Erfindungsgemäß wird das Verstellgetriebe als Zugmittelgetriebe mit band- oder kettenförmigem Zugmittel vorgeschlagen. Beim Einsatz dieser im Aufbau einfachen und daher robusten Zugmittel läßt sich ein Gesamtwirkungsgrad erzielen, wie er üblicherweise nur aus deutlich aufwendigeren Generatorverstellgetrieben bekannt ist.

Es wird vorzugsweise ein kettenförmiges Zugmittel benutzt, das bei der Verwendung von Kettenscheiben annähernd rutschfrei die auftretenden Drehmomente übertragen kann.

Die Abtriebswelle weist eine andere Drehrichtung auf als die Antriebswelle des Stellkoppelgetriebes. In vorteilhafter Weise sind dazu nur wenige Bauteile erforderlich mit positiver Auswirkung auf die Robustheit des Getriebes. Aufgrund der niedrigen Anzahl von Bauelementen entstehen auch nur kleine Leerlaufverluste, was zusätzlich das Wirkungsgradverhalten verbessert. Durch den nachgeordneten Aufbau des Verstellgetriebes ist dieses von außen sehr leicht zugänglich und für Wartungsarbeiten einfach ausbaubar.

Das Stellkoppelgetriebe kann dabei ein oder zwei Ausgänge aufweisen. Durch die Anordnung eines weiteren Abtriebsrades auf der Abtriebswelle kann die Abtriebsdrehzahl den Erfordernissen des Generators in einfacher Weise angepaßt werden, d.h. bei Weiterverwendung der Elemente Umlauf- und Verstellgetriebe kann durch Nachordnung nur eines Zahnrades die Anpassung an die erforderliche Generatordrehzahl erfolgen.

Ein Ausführungsbeispiel der Erfindung ist in den Zeichnungen dargestellt. Es zeigt:

Fig. 1 ein Schema des Stellkoppelgetriebes mit einem Abtrieb,

Fig. 2 ein Schema des Stellkoppelgetriebes mit einem zusätzlichen Abtriebsrad.

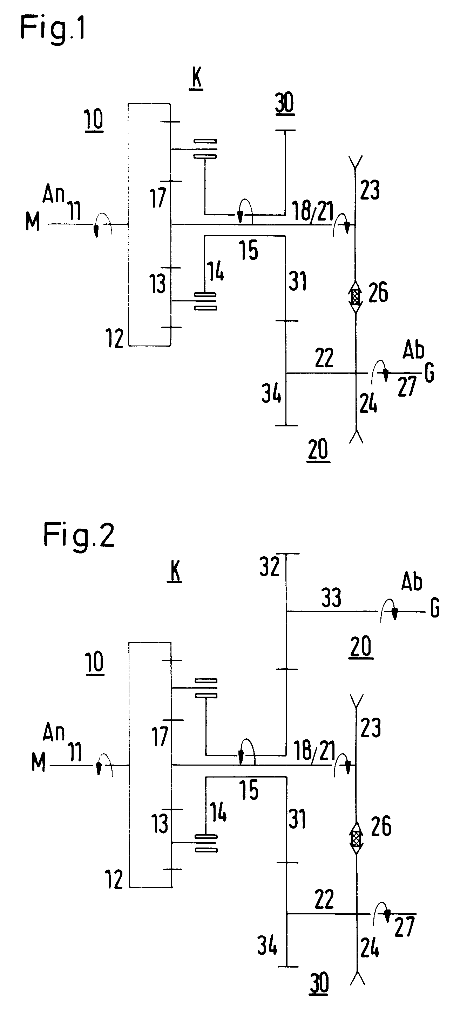

Dabei zeigen die Figuren 1 und 2 ein Umlaufgetriebe 10 mit einer mit dem Motor M in Verbindung stehenden Antriebswelle 11. An der Antriebswelle 11 ist ein Hohlrad 12 angeschlossen, das mit den Planetenrädern 13 kämmt. Die Planetenräder 13 kämmen wiederum mit dem Sonnenrad 17, das kopfseitig an einer Welle 18 befestigt ist.

Die Planetenräder 13 stehen mit einem Steg 14 in Verbindung, der an einer Hohlwelle 15 angeordnet ist.

Die Welle 18 steht als Antriebswelle 21 mit einem Verstellgetriebe 20 in Verbindung. An der Antriebswelle 21 ist eine Scheibe 23 befestigt, die über ein Zugmittel 26 mit einer an einer Antriebswelle 22 befestigten Scheibe 24 antriebsmäßig in Verbindung steht. An der Scheibe 24 ist ein mit einer Arbeitsmaschine G verbundener Abtrieb 27 angeordnet.

An der mit der Scheibe 24 verbundenen Antriebswelle 22 ist ein Getrieberad 34 einer Stirnradstufe 30 befestigt. Das Getrieberad 34 kämmt mit einem Getrieberad 31, welches an der Hohlwelle 15 befestigt ist.

Die Figur 2 weist in der Stirnradstufe 30 ein weiteres Zahnrad 32 auf, welches mit dem Zahnrad 31 kämmt. Das Zahnrad 32, das einen zum Getrieberad 34 unterschiedlichen Durchmesser aufweist, ist an eine Abtriebswelle 33 angeschlossen, die an eine Arbeitsmaschine G anschließbar ist.

**Patentansprüche**

1. Antrieb mit einem Stellkoppelgetriebe zur Konstanthaltung der Drehzahl einer Arbeitsmaschine, insbesondere eines Generators, das eine an eine Welle einer Antriebsanlage anschließbares Planetengetriebe sowie ein Verstellgetriebe aufweist, dessen mit der Arbeitsmaschine verbindbare Abtriebswelle achsparallel zur Antriebswelle des Stellkoppelgetriebes angeordnet ist,
dadurch gekennzeichnet,
daß das Stellkoppelgetriebe (K) eine negative Gesamtübersetzung besitzt und

daß das Verstellgetriebe (20) als Zugmittelgetriebe ausgebildet ist.

2. Antrieb mit einem Stellkoppelgetriebe nach Anspruch 1,
dadurch gekennzeichnet,
daß das Stellkoppelgetriebe (K) ein Planetengetriebe (10) mit einem Hohlrad (12), einem Sonnenrad (17) sowie Planetenräder (13) aufweist, wobei sich das Verhältnis der Durchmesser von dem Hohlrad (12) zu dem Sonnenrad (17) in einem Bereich von 4:1 bis 5,7:1 bewegt.

3. Antrieb mit einem Stellkoppelgetriebe nach Anspruch 2,
dadurch gekennzeichnet,
daß die dem Planetengetriebe (10) nachgeordnete Stirnradstufe (30) Getrieberäder (31 und 34) aufweist, die ein Verhältnis der Durchmesser von 1,7:1 bis 2,3:1 besitzen.

4. Antrieb mit einem Stellkoppelgetriebe nach Anspruch 3,
dadurch gekennzeichnet,
daß mit dem Getrieberad (31) der Stirnradstufe (30) ein weiteres Zahnrad (32) kämmt, das zur Anpassung der Abtriebsdrehzahl einer Abtriebswelle (33) einen Durchmesser aufweist, der unterschiedlich zu dem des Getrieberades (34) ist.

5. Antrieb mit einem Stellkoppelgetriebe nach Anspruch 1,
dadurch gekennzeichnet,
daß das Verstellgetriebe (20) ein kettenförmiges Zugmittel (26) aufweist.

6. Antrieb mit einem Stellkoppelgetriebe nach den Ansprüchen 1 oder 5,
dadurch gekennzeichnet,
daß die Zugmittel (26) von Scheiben (23, 24) getrieben werden, bei denen das Verhältnis der Laufdurchmesser der Zugmittel Im Bereich von 0,4:1 bis 2,5:1 veränderbar ist.

# Fig.1

# Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 331 721 (GKN) <br> * Seite 3, Zeile 27 - Seite 5, Zeile 29; Abbildungen 1,2 * | 1,5 <br><br> 2-4 | F16H37/08 |
| A | US-A-3 439 563 (PETTY) <br> * Spalte 4, Zeile 50 - Zeile 52; Abbildung 1 * <br> --- | 1 | |
| D,A | DE-A-3 408 543 (AISIN SEIKI) <br> * Zusammenfassung; Abbildungen 10-15 * <br> --- | 1,2 | |
| D,A | DE-A-2 208 511 (MANNESMANN MEER) <br> * Seite 4 - Seite 6; Abbildung 2 * <br><br> ----- | 1 | |

RECHERCHIERTE SACHGEBIETE (Int. Cl.5)

F16H
B63J

Der vorliegende Recherchenbericht wurde für alle Patentansprüche erstellt

| Recherchenort | Abschlußdatum der Recherche | Prüfer |
|---|---|---|
| DEN HAAG | 22 APRIL 1992 | FLORES E. |

EPO FORM 1503 03.82 (P0403)